# EUROPÄISCHE PATENTSCHRIFT

(11) **EP 3 085 026 B1**
(45) Veröffentlichungstag und Bekanntmachung des Hinweises auf die Patenterteilung: **21.02.2018**
(21) Anmeldenummer: 14812219.5
(22) Anmeldetag: 12.12.2014
(51) Int. Cl.: H04L 12/28

(54) **VERFAHREN ZUM UMSCHALTEN VON HAUSHALTSGERÄTEN ZWISCHEN EINEM ZUHAUSE-MODUS UND EINEM NICHT-ZUHAUSE-MODUS, TRAGBARE BEDIENVORRICHTUNG, SYSTEM UND COMPUTERPROGRAMMPRODUKT**
METHOD FOR CHANGING OVER DOMESTIC APPLIANCES BETWEEN AN AT-HOME MODE AND A NOT-AT-HOME MODE, PORTABLE OPERATING APPARATUS, SYSTEM AND COMPUTER PROGRAM PRODUCT
PROCÉDÉ DE CHANGEMENT DE MODE D'APPAREILS ÉLECTROMÉNAGERS ENTRE UN MODE PRÉSENCE ET UN MODE ABSENCE, DISPOSITIF DE COMMANDE PORTABLE, SYSTÈME ET LOGICIEL INFORMATIQUE

(30) Priorität: 18.12.2013 DE 102013226390
(43) Veröffentlichungstag der Anmeldung: 26.10.2016
(73) Patentinhaber: BSH Hausgeräte GmbH, 81739 München (DE)
(72) Erfinder: HÄPP, Claudia, 85591 Vaterstetten (DE); PIETSCH, Ingo, 81829 München (DE); BUI TRAN, Duc Hanh, 81247 München (DE)
(86) Internationale Anmeldenummer: PCT/EP2014/077478
(87) Internationale Veröffentlichungsnummer: WO 2015/091230

(56) Entgegenhaltungen:
- US-A1- 2004 152 460
- US-A1- 2007 112 939

## Beschreibung

Die Erfindung betrifft ein Verfahren zum Steuern einer Mehrzahl von Haushaltsgeräten mithilfe einer tragbaren Bedienvorrichtung, welche mit den Haushaltsgeräten drahtlos kommuniziert und im Rahmen dieser Kommunikation ein Steuersignal an die Haushaltsgeräte übermittelt, mit welchem die Haushaltsgeräte gemeinsam zwischen einem Zuhause-Modus und einem Nicht-Zuhause-Modus umgeschaltet werden. Im Zuhause-Modus werden bei den Haushaltsgeräten erste Einstellungen vorgenommen, während in dem Nicht-Zuhause-Modus zweite Einstellungen an den Haushaltsgeräten vorgenommen werden. Die Erfindung betrifft außerdem eine tragbare Bedienvorrichtung zum Durchführen eines solchen Verfahrens, ein System mit einer Mehrzahl von Haushaltsgeräten und einer tragbaren Bedienvorrichtung, wie auch ein Computerprogrammprodukt mit einem Datenträger, auf welchem ein Computerprogramm zum Durchführen eines erfindungsgemäßen Verfahrens abgelegt ist.

Es ist bereits Stand der Technik, Haushaltsgeräte mit einer Kommunikationseinrichtung auszustatten, über welche eine drahtlose Kommunikation mit einem mobilen Kommunikationsendgerät durchgeführt werden kann. Die Datenkommunikation zwischen den Haushaltsgeräten einerseits und einem mobilen Endgerät andererseits kann dabei direkt unter Verwendung eines drahtlosen Heimnetzwerks durchgeführt werden, wie beispielsweise eines WLAN-Netzwerks. Andererseits kann die Datenkommunikation auch unter Vermittlung eines Internet-Servers vorgenommen werden, wobei hier die Haushaltsgeräte beispielsweise über einen WLAN-Router mit dem Internet-Server kommunizieren können. Üblicherweise wird die Datenkommunikation über das Heimnetzwerk durchgeführt, solange sich das tragbare Endgerät in der Reichweite dieses Netzwerks befindet. Befindet sich das tragbare Endgerät außerhalb der Reichweite, erfolgt die Datenkommunikation dann über den Internet-Server. Wird als tragbares Endgerät beispielsweise ein Mobiltelefon verwendet, wird die Kommunikationsverbindung zum Internet-Server über ein Mobilfunknetzwerk aufgebaut.

Eine Datenkommunikation zwischen Haushaltsgeräten einerseits und einem Internet-Server bzw. einem tragbaren Kommunikationsendgerät andererseits wird beispielsweise durch das System "Home Connect" ermöglicht, welches von dem Hause der Anmelderin angeboten wird.

Die US 2007/0112939 A1 beschreibt ein System zum Konfigurieren eines Gerätezustands im Bereich der Heimautomation. Aus der US 2004/0152460 A1 ist ein Heimnetzwerksystem vorbekannt, das mit einem drahtlos angebundenen Endbenutzergerät interoperabel ist.

Die Erfindung geht von einem System aus, wie es in dem Dokument DE 10 2009 052 952 A1 beschrieben ist. Dieses Dokument offenbart einen Präsenzmelder für Wohneinheiten, welcher mindestens einen mobilen Sender umfasst, der über Fernkommunikationsmittel verfügt, wobei der Sender beispielsweise als Mobiltelefon ausgebildet ist. In der Wohneinheit ist ein Empfänger angeordnet, welcher ein von dem Sender ausgesendetes Signal empfangen und somit die Präsenz des Senders in der Wohneinheit detektieren kann. Wird die Präsenz des Senders detektiert, werden elektrische Geräte, die sich in der Wohneinheit befinden, von einem Nicht-Zuhause-Modus in einen Zuhause-Modus umgeschaltet. Dieses Umschalten kann beispielsweise beinhalten, dass eine Leuchte eingeschaltet, eine Tür geöffnet oder aber ein Fenster gekippt werden soll. Die Umschaltung zwischen dem Nicht-Zuhause-Modus und dem Zuhause-Modus erfolgt hier automatisch aufgrund der Detektion des Mobiltelefons in der Wohneinheit. Optional kann hier auch vorgesehen sein, dass das Mobiltelefon ein Navigationssystem umfasst, wodurch die genannten Zustände bereits im Voraus eingeleitet werden können. So kann beispielsweise eine Heizung bereits im Voraus aktiviert werden, wenn das Mobiltelefon eine vorgegebene Entfernung von der Wohneinheit unterschreitet.

An dem genannten Stand der Technik ist als nachteilig der Umstand anzusehen, dass die Umschaltung zwischen dem Zuhause-Modus und dem Nicht-Zuhause-Modus stets automatisch und somit ohne Rücksicht auf den Benutzer erfolgt, also auch dann, wenn dieses Umschalten durch den Benutzer aktuell nicht gewollt ist. Dies kann beispielsweise dann der Fall sein, wenn sich der Benutzer nur kurzzeitig in der Wohneinheit aufhält.

Würden nun bestimmte Haushaltsgeräte aktiviert oder aber andere Einstellungen automatisch vorgenommen, so kann dies nicht nur zu einer Irritation des Benutzers führen, sondern erhöht auch den Energieverbrauch.

Es ist Aufgabe der Erfindung, einen Weg aufzuzeigen, wie bei einem Verfahren der eingangs genannten Gattung das Umschalten zwischen dem Zuhause-Modus und dem Nicht-Zuhause-Modus bedarfsgerechter ermöglicht werden kann.

Diese Aufgabe wird erfindungsgemäß durch ein Verfahren, durch eine tragbare Bedienvorrichtung, durch ein System sowie durch ein Computerprogrammprodukt mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Bei einem erfindungsgemäßen Verfahren werden eine Mehrzahl von Haushaltsgeräten mithilfe einer tragbaren Bedienvorrichtung gesteuert, welche mit den Haushaltsgeräten drahtlos kommuniziert. Durch die tragbare Bedienvorrichtung wird an die Haushaltsgeräte ein Steuersignal übermittelt, mit welchem die Haushaltsgeräte gemeinsam zwischen einem Zuhause-Modus, in welchem bei den Haushaltsgeräten erste Einstellungen vorgenommen werden, und einem Nicht-Zuhause-Modus umgeschaltet werden, in welchem bei den Haushaltsgeräten von den ersten Einstellungen unterschiedliche zweite Einstellungen vorgenommen werden. Erfindungsgemäß ist vorgesehen, dass durch die tragbare Bedienvorrichtung eine Bedieneingabe empfangen wird, welche durch einen Benutzer über eine Eingabeeinrichtung der tragbaren Bedienvorrichtung durchgeführt wird, und das Steuersignal zum Umschalten der Haushaltsgeräte durch die tragbare Bedienvorrichtung aufgrund der empfangenen Bedieneingabe und somit unmittelbar infolge dieser Bedieneingabe ausgesendet wird.

Es wird somit dem Benutzer die Möglichkeit gegeben, selbst zu entscheiden, wann die Haushaltsgeräte in den Zuhause-Modus und wann in den Nicht-Zuhause-Modus geschaltet werden sollen. Durch entsprechende Bedieneingaben an der tragbaren Bedienvorrichtung kann die Umschaltung zwischen den beiden Modi somit bedarfsgerecht und situationsabhängig durch den Benutzer vorgenommen werden, wodurch insgesamt Situationen verhindert werden können, in denen das Umschalten von dem einen Modus in den anderen Modus ungewollt erfolgt. Das manuelle Umschalten ist folglich besonders benutzerfreundlich und sorgt außerdem dafür, dass elektrische Energie gespart werden kann. Es können nämlich Situationen verhindert werden, in denen Haushaltsgeräte ungewollt aktiviert werden, wenn sich der Benutzer nur kurzzeitig in der Wohneinheit befindet.

Beispielsweise kann vorgesehen sein, dass dem Zuhause-Modus und/oder dem Nicht-Zuhause-Modus individuelle Funktionen und/oder Geräteszustände zugeordnet und in einem Speicher hinterlegt sind. Der Nutzer kann somit durch Aktivierung des Zuhause-Modus und/oder des Nicht-Zuhause-Modus die Haushaltsgeräte in einen von ihm vorab definierten Zustand bringen, z.B. reduzierte Leistungsaufnahme, Deaktivierung, Anzeigen auf einem Display und dergleichen. Es sind grundsätzlich Szenarien bzw. Ansammlung verschiedener Funktionen möglich, die der Nutzer durch die Bedieneingabe aktivieren oder deaktivieren kann.

Unter einem Haushaltsgerät wird vorliegend insbesondere ein Gerät verstanden, welches zur Haushaltsführung eingesetzt wird. Dies kann insbesondere ein Haushaltsgroßgerät sein, wie beispielsweise ein Gerät zur Pflege von Wäschestücken, ein Haushaltsgerät zur Zubereitung von Lebensmitteln, beispielsweise ein Gargerät, wie zum Beispiel ein Backofen oder ein Herd, ein Haushaltsgerät zum Lagern und Konservieren von Lebensmitteln, wie ein Haushaltskältegerät, beispielsweise ein Kühlgerät oder ein Gefriergerät oder eine Kühl-Gefrierkombination, ein Klimagerät oder eine Geschirrspülmaschine. Ein Gerät zur Pflege von Wäschestücken kann dabei eine Waschmaschine, ein Wäschetrockner oder ein Waschtrockner sein. Das Haushaltsgerät kann aber auch ein Haushaltskleingerät sein, wie beispielsweise ein Kaffeevollautomat oder eine Küchenmaschine.

Unter einer tragbaren Bedienvorrichtung wird vorliegend insbesondere ein mobiles Kommunikationsendgerät verstanden, also bevorzugt ein tragbares Endgerät, welches zur drahtlosen Kommunikation gemäß einem vorbestimmten Kommunikationsstandard ausgebildet ist und auf welchem neue Anwendungen bzw. Applikationen (Computerprogramme) installiert und dann ausgeführt werden können. Das tragbare Kommunikationsendgerät kann beispielsweise ein Mobiltelefon (Smartphone), ein Tablet-PC oder ein vergleichbares mobiles Endgerät sein, wie zum Beispiel ein MP3-Player mit einer entsprechenden Kommunikationseinrichtung und einer Anzeigeeinrichtung. Diese Ausführungsform macht sich dabei die Tatsache zunutze, dass heutzutage nahezu jeder über ein intelligentes Mobiltelefon mit einem Display verfügt, sodass sich der Einsatz von zusätzlichen Kommunikationsgeräten erübrigt.

Die Datenkommunikation zwischen der tragbaren Bedienvorrichtung einerseits und den Haushaltsgeräten andererseits kann beispielsweise über ein drahtloses Heimnetzwerk, beispielsweise ein WLAN-Netzwerk, und/oder über einen Internet-Server durchgeführt werden. Insbesondere ist vorgesehen, dass die Datenkommunikation über das Heimnetzwerk durchgeführt wird, solange sich die tragbare Bedienvorrichtung innerhalb der Reichweite des Heimnetzwerks befindet. Befindet sich die tragbare Bedienvorrichtung außerhalb der Reichweite, so kann die Datenkommunikation über den Internet-Server vorgenommen werden, wobei die Kommunikationsverbindung zum Internet-Server insbesondere über ein Mobilfunknetz aufgebaut werden kann. Die Haushaltsgeräte können dabei über eine zugeordnete Kommunikationsschnittstelle an das Heimnetzwerknämlich an einen WLAN-Router - angebunden sein.

Das Umschalten zwischen dem Zuhause-Modus und dem Nicht-Zuhause-Modus bedeutet insbesondere, dass der Benutzer über die Eingabeeinrichtung der tragbaren Bedienvorrichtung die Haushaltsgeräte sowohl von dem Nicht-Zuhause-Modus in den Zuhause-Modus als auch umgekehrt umschalten kann.

Bevorzugt weist die tragbare Bedienvorrichtung eine berührungssensitive Anzeigeeinrichtung mit einer berührungsempfindlichen Oberfläche als Eingabeeinrichtung auf. Auf dieser berührungssensitiven Anzeigeeinrichtung (Touchscreen) kann eine Bedientaste - insbesondere ein Schiebeschalter - bereitgestellt werden, welche zum Umschalten zwischen dem Zuhause-Modus und dem Nicht-Zuhause-Modus dient. Die Bedieneingabe erfolgt also durch Betätigen der Bedientaste durch Berühren der berührungssensitiven Anzeigeeinrichtung. Somit ist die Bedienung besonders intuitiv und sicher, sodass auch Fehlbedienungen seitens des Benutzers verhindert werden können.

Ergänzend oder alternativ zu der genannten Bedientaste kann die Eingabeeinrichtung auch ein Spracherkennungssystem umfassen, mittels welchem Spracheingaben des Benutzers empfangen und ausgewertet werden können. Das Umschalten zwischen den beiden Modi kann hier auch durch die Spracheingaben gesteuert werden, indem entsprechende Sprachbefehle durch die tragbare Bedienvorrichtung empfangen und abhängig von diesen Sprachbefehlen des Benutzers der eine oder der andere Modus aktiviert wird.

Weiterhin ergänzend oder alternativ ist auch eine Gestensteuerung möglich, um das Umschalten zwischen dem Zuhause-Modus und dem Nicht-Zuhause-Modus zu bewirken.

Es erweist sich als besonders vorteilhaft, wenn in dem Nicht-Zuhause-Modus durch die tragbare Bedienvorrichtung von den Haushaltsgeräten Statusdaten empfangen werden, welche den aktuellen Betriebszustand der jeweiligen Haushaltsgeräte charakterisieren. Ist der jeweilige aktuelle Betriebszustand der Haushaltsgeräte in der tragbaren Bedienvorrichtung bekannt, können auf einer Anzeigeeinrichtung der tragbaren Bedienvorrichtung in dem Nicht-Zuhause-Modus die momentan aktivierten Haushaltsgeräte angezeigt werden. Somit wird der Benutzer in dem Nicht-Zuhause-Modus darüber informiert, welche Haushaltsgeräte sich momentan im Betrieb befinden. Der Benutzer kann somit ohne viel Aufwand überprüfen, welche Haushaltsgeräte er gegebenenfalls vergessen hat, auszuschalten. Dies erweist sich insbesondere im Falle eines Gargeräts, beispielsweise eines Backofens oder eines Herds, als besonders vorteilhaft, da hier gegebenenfalls Unfälle verhindert werden können.

Wie bereits ausgeführt, werden in dem Zuhause-Modus erste Einstellungen an den Haushaltsgeräten vorgenommen, während in dem Nicht-Zuhause-Modus zweite Einstellungen an den Haushaltsgeräten vorgenommen werden. Die Änderung der Einstellungen kann vorliegend beispielsweise die Aktivierung und/oder Deaktivierung eines Haushaltsgeräts und/oder die Veränderung eines Parameters eines Haushaltsgeräts und/oder die Umschaltung eines Haushaltsgeräts in einen Energiesparmodus und/oder die Bereitstellung vorbestimmter Funktionalitäten durch ein Haushaltsgerät umfassen.

In dem Nicht-Zuhause-Modus können beispielsweise folgende Ausführungsformen vorgesehen sein:
Die zweiten Einstellungen können beinhalten, dass zumindest eines der Haushaltsgeräte, insbesondere ein Haushaltskältegerät, von einem Normalmodus in einen Energiesparmodus mit einem gegenüber dem Normalmodus reduzierten elektrischen Leistungsverbrauch umgeschaltet wird. Auf diese Art und Weise kann elektrische Energie gespart werden.

Ergänzend oder alternativ können die zweiten Einstellungen umfassen, dass bei zumindest einem der Haushaltsgeräte, insbesondere bei einem Gerät zur Pflege von Wäschestücken und/oder einer Geschirrspülmaschine, nach Abschluss eines Betriebsprogramms die Ausgabe eines akustischen Signals unterbleibt, welches üblicherweise im Zuhause-Modus ausgegeben wird. Auch dies spart elektrische Energie und verhindert außerdem die Erzeugung von lästigen akustischen Signalen, durch welche beispielsweise die Nachbarn gestört werden könnten.

Weiterhin ergänzend oder alternativ können die zweiten Einstellungen beinhalten, dass zumindest eines der Haushaltsgeräte, insbesondere ein Gerät zur Pflege von Wäschestücken und/oder eine Geschirrspülmaschine, in einen Ökomodus umgeschaltet wird, in welchem ein Betriebsprozess dieses Haushaltsgeräts im Vergleich zu einem Normalmodus bzw. im Vergleich zum Zuhause-Modus unter Inanspruchnahme einer längeren Zeitdauer und einer geringeren elektrischen Leistung durchgeführt wird. Da der Benutzer ohnehin nicht zu Hause ist, kann die Dauer des Betriebsprozesses verlängert werden, wodurch elektrische Energie gespart werden kann.

In dem Nicht-Zuhause-Modus kann ergänzend oder alternativ auch vorgesehen sein, dass mittels eines Fernsehempfängers eine vorbestimmte, beispielsweise durch den Benutzer zuvor festgelegte Fernsehsendung aufgenommen wird. Eine solche Vorgehensweise ist besonders benutzerfreundlich, da die Lieblingsfernsehsendungen nicht mehr verpasst werden.

Demgegenüber können in dem Zuhause-Modus folgende (erste) Einstellungen vorgenommen werden: Die ersten Einstellungen können beinhalten, dass zumindest eines der Haushaltsgeräte, insbesondere das oben genannte Haushaltskältegerät, von dem Energiesparmodus in den Normalmodus umgeschaltet wird. Somit ist dieses Haushaltsgerät voll verfügbar.

Ergänzend oder alternativ können die ersten Einstellungen beinhalten, dass bei zumindest einem der Haushaltsgeräte, insbesondere bei einem Gerät zur Pflege von Wäschestücken und/oder einer Geschirrspülmaschine, nach Abschluss eines Betriebsprogramms die Aussendung einer Nachricht unterbleibt, welche sonst in dem Nicht-Zuhause-Modus zur Signalisierung des Abschlusses des Betriebsprozesses an die tragbare Bedienvorrichtung drahtlos übermittelt wird. Da sich der Benutzer ohnehin zu Hause befindet, braucht hier keine separate Nachricht an die tragbare Bedienvorrichtung übermittelt zu werden.

Weiterhin ergänzend oder alternativ kann in dem Zuhause-Modus auch ein Wasserkocher zum Kochen von Wasser aktiviert werden. Hierbei sendet die tragbare Bedienvorrichtung an den Wasserkocher ein entsprechendes Steuersignal, mit welchem der Wasserkocher aktiviert wird. Dies kann beispielsweise direkt beim Umschalten in den Zuhause-Modus vorgenommen werden, sodass sich der Benutzer nach Rückkehr nach Hause beispielsweise sofort einen Tee zubereiten kann.

Wie bereits ausgeführt, erweist es sich als besonders vorteilhaft, wenn die ersten und/oder die zweiten Einstellungen auch benutzerindividuell definiert werden können. In einer Ausführungsform ist vorgesehen, dass durch die tragbare Bedienvorrichtung eine Bedieneingabe des Benutzers empfangen wird, durch welche für zumindest eines der Haushaltsgeräte die ersten und/oder die zweiten Einstellungen benutzerspezifisch vorgenommen bzw. festgelegt werden. Der Benutzer kann somit selbst definieren, welche Funktionen in dem Zuhause-Modus und/oder welche Funktionen in dem Nicht-Zuhause-Modus aktiviert bzw. deaktiviert werden sollten.

Erfindungsgemäß umfasst die tragbare Bedienvorrichtung einen Navigationsempfänger, mittels welchem Positionsdaten bereitgestellt werden, welche eine aktuelle Position der Bedienvorrichtung charakterisieren. Bei dem Navigationsempfänger kann es sich beispielsweise um einen GPS-Empfänger handeln. Die Positionsdaten geben also die aktuelle geographische Position der tragbaren Bedienvorrichtung an. Ist die aktuelle Position bekannt, so kann zumindest eines der Haushaltsgeräte auch abhängig von der aktuellen Position in Betrieb genommen und/oder deaktiviert werden. Somit kann die Steuerung der Haushaltsgeräte noch bedarfsgerechter erfolgen. Dies kann beispielsweise so implementiert werden, dass die positionsabhängige Steuerung der Haushaltsgeräte ausschließlich in einem der Modi ermöglicht wird, beispielsweise ausschließlich in dem Zuhause-Modus oder ausschließlich in dem Nicht-Zuhause-Modus. Alternativ kann jedoch auch vorgesehen sein, dass die positionsabhängige Steuerung der Haushaltsgeräte in beiden Betriebsmodi ermöglicht wird, nämlich sowohl in dem Zuhause-Modus als auch in dem Nicht-Zuhause-Modus.

Wird durch die tragbare Bedienvorrichtung anhand der aktuellen Position detektiert, dass sich die Bedienvorrichtung in einem vorgegebenen Referenzbereich (dieser entspricht insbesondere dem Wohnbereich bzw. der Wohneinheit) befindet, so kann durch die tragbare Bedienvorrichtung unmittelbar oder zusätzlich nach Erfülltsein eines vorgegebenen Zusatzkriteriums ein Steuersignal an einen Kaffeeautomaten übermittelt werden, durch welches der Kaffeeautomat in Betrieb genommen und somit beispielsweise Kaffee zubereitet wird. Befindet sich der Benutzer zu Hause, so wird somit automatisch der Kaffee zubereitet. Dies erweist sich insbesondere morgens früh als besonders benutzerfreundlich, da der Benutzer unmittelbar nach dem Aufstehen eine Tasse Kaffee genießen kann.

Also kann vorgesehen sein, dass durch die tragbare Bedienvorrichtung die aktuelle Ortszeit erfasst wird und das oben genannte Zusatzkriterium die Bedingung umfasst, dass die aktuelle Ortszeit in einem vorgegebenen Wertebereich liegt. Dieser Wertebereich wird vorzugsweise durch den Benutzer selbst definiert, sodass der Kaffeeautomat nur dann in Betrieb genommen wird, wenn sich der Benutzer einerseits zu Hause befindet und andererseits auch die aktuelle Ortszeit in dem vorgegebenen Wertebereich liegt, beispielsweise um sieben Uhr morgens.

Werden mittels eines Navigationsempfängers der tragbaren Bedienvorrichtung Positionsdaten bereitgestellt, welche die aktuelle Position der Bedienvorrichtung charakterisieren, so wird durch die tragbare Bedienvorrichtung anhand der aktuellen Position sowie anhand von empfangenen Statusdaten eines vorbestimmten Haushaltsgeräts, insbesondere eines Gargeräts, detektiert, ob sich die Bedienvorrichtung einerseits außerhalb eines vorgegebenen Referenzbereichs (nicht zu Hause) befindet und andererseits das vorbestimmte Haushaltsgerät aktiviert ist. Ist dies der Fall, so wird durch die tragbare Bedienvorrichtung ein Warnsignal ausgegeben, mittels welchem der Benutzer auf den aktivierten Zustand des Haushaltsgeräts hingewiesen wird. Das Warnsignal kann beispielsweise ein akustisches und/oder ein optisches Signal sein, welches den Benutzer darauf hinweist, dass ein Haushaltsgerät, insbesondere ein Backofen und/oder ein Herd, aktiv ist. Der Benutzer kann somit entsprechend reagieren und das aktivierte Haushaltsgerät mittels der tragbaren Bedienvorrichtung wieder deaktivieren.

Wie bereits ausgeführt, ist die tragbare Bedienvorrichtung vorzugsweise als mobiles Kommunikationsendgerät ausgebildet, welches über ein Heimnetzwerk und/oder einen Internet-Server mit den Haushaltsgeräten kommuniziert. Solange sich das tragbare Kommunikationsendgerät in der Reichweite des Heimnetzwerks befindet, kann die Datenkommunikation über dieses Heimnetzwerk durchgeführt werden. Befindet sich das tragbare Kommunikationsendgerät außerhalb der Reichweite, erfolgt die Datenkommunikation bevorzugt über den Internet-Server. Wird als tragbares Endgerät beispielsweise ein Mobiltelefon verwendet, kann die Kommunikationsverbindung zum Internet-Server über ein Mobilfunknetzwerk aufgebaut werden.

Die Erfindung betrifft außerdem eine tragbare Bedienvorrichtung, insbesondere ein mobiles Kommunikationsendgerät, welche/welches dazu ausgelegt ist, ein erfindungsgemäßes Verfahren durchzuführen.

Ein erfindungsgemäßes System umfasst eine Mehrzahl von Haushaltsgeräten sowie eine erfindungsgemäße tragbare Bedienvorrichtung.

Ein erfindungsgemäßes Computerprogrammprodukt umfasst einen Datenträger, auf welchem ein Computerprogramm abgelegt ist, welches beim Ablauf auf einem mobilen Kommunikationsendgerät ein erfindungsgemäßes Verfahren durchführen kann.

Die mit Bezug auf das erfindungsgemäße Verfahren vorgestellten bevorzugten Ausführungsformen und deren Vorteile gelten entsprechend für die erfindungsgemäße Bedienvorrichtung, für das erfindungsgemäße System sowie für das erfindungsgemäße Computerprogrammprodukt.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nachfolgend anhand eines bevorzugten Ausführungsbeispiels sowie unter Bezugnahme auf die beigefügten Zeichnungen näher erläutert.

Es zeigen:
- Fig. 1: in schematischer Darstellung ein System gemäß einer Ausführungsform der Erfindung;
- Fig. 2: in schematischer Darstellung eine tragbare Bedienvorrichtung gemäß einer Ausführungsform der Erfindung, wobei ein Zuhause-Modus aktiviert ist; und
- Fig. 3: die Bedienvorrichtung, wobei ein Nicht-Zuhause-Modus aktiviert ist.

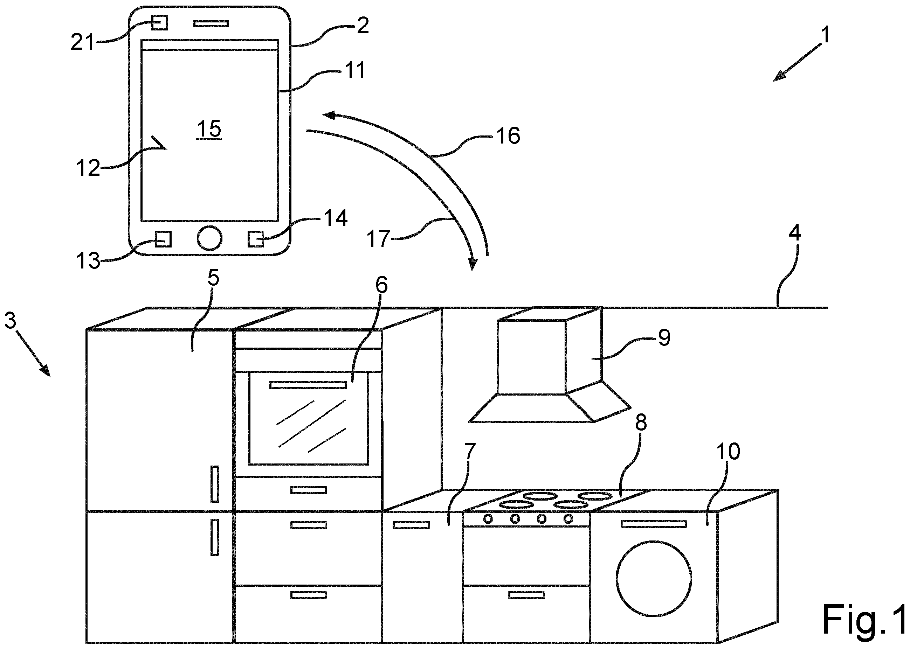

Ein in Fig. 1 dargestelltes System 1 umfasst eine tragbare Bedienvorrichtung 2 sowie eine Mehrzahl von Haushaltsgeräten 3, welche in einer Wohneinheit 4 bzw. einem Haushalt aufgestellt sind und beispielsweise folgende Haushaltsgeräte beinhalten können: ein Haushaltskältegerät 5 (beispielsweise eine Kühl-Gefrierkombination), einen Backofen 6, eine Geschirrspülmaschine 7, einen Herd 8, eine Dunstabzugshaube 9 sowie eine Waschmaschine 10. Die Bedienvorrichtung 2 ist im Ausführungsbeispiel als tragbares Kommunikationsendgerät ausgebildet, insbesondere als Smartphone, und weist eine Anzeigeeinrichtung 11 auf, welche eine berührungssensitive Oberfläche 12 hat und somit insgesamt als Touchscreen ausgebildet ist.

In dem tragbaren Kommunikationsendgerät ist eine Steuereinheit 13 angeordnet, welche zur Ansteuerung der Anzeigeeinrichtung 11 ausgebildet ist und außerdem Bedieneingaben empfängt, die ein Benutzer an der berührungssensitiven Oberfläche 12 vornimmt. Zusätzlich umfasst die tragbare Bedienvorrichtung 2 eine Kommunikationseinrichtung 14, welche zur drahtlosen Kommunikation mit den Haushaltsgeräten 3 ausgebildet ist. Diese Kommunikation kann beispielsweise über ein drahtloses Heimnetzwerk erfolgen, zum Beispiel über einen WLAN-Router, und/oder unter Vermittlung eines Internet-Servers.

Auf der tragbaren Bedienvorrichtung 2 wird eine Applikation als Computerprogramm installiert, welche bzw. welches der Benutzer jederzeit starten kann. Dies erfolgt durch entsprechende Bedieneingaben an der berührungssensitiven Oberfläche 12. Wird diese Applikation aktiviert, erzeugt die Steuereinheit 13 auf der Anzeigeeinrichtung 11 eine graphische Benutzeroberfläche 15, über welche die Haushaltsgeräte 3 bedient werden können. Über diese graphische Benutzeroberfläche 15 können einerseits die jeweiligen Betriebszustände der Haushaltsgeräte 3 ausgegeben werden; andererseits kann der Benutzer über die Benutzeroberfläche 15 die Haushaltsgeräte 3 steuern, indem entsprechende Bedieneingaben durchgeführt werden.

Insgesamt können also von den Haushaltsgeräten 3 Statusdaten 16 mit Informationen über den aktuellen Betriebszustand an die tragbare Bedienvorrichtung 2 übermittelt werden, während von der tragbaren Bedienvorrichtung 2 Steuersignale 17 an die Haushaltsgeräte 3 übermittelt werden können.

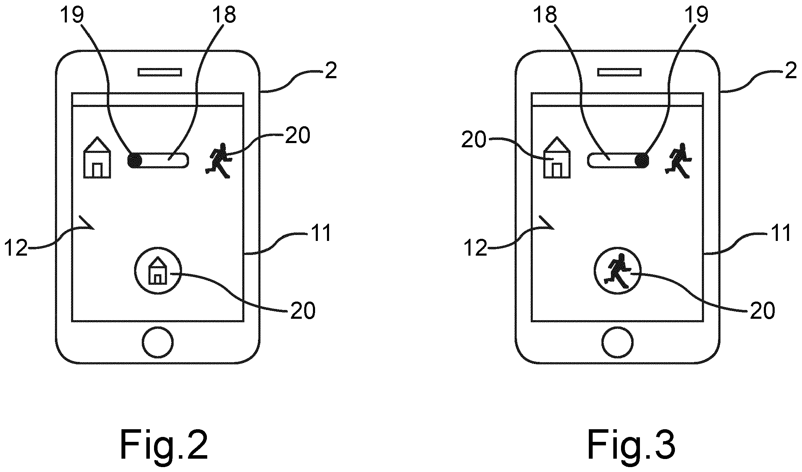

In der Benutzeroberfläche 15 kann eine Seite aufgerufen werden, welche es dem Benutzer ermöglicht, zwischen einem Zuhause-Modus und einem Nicht-Zuhause-Modus des Systems 1 auszuwählen. Bezug nehmend auf Fig. 2 wird auf der Anzeigeeinrichtung 11 eine Bedientaste 18 bereitgestellt, hier in Form eines Schiebeschalters. Mittels der Bedientaste 18 kann der Benutzer zwischen dem Zuhause-Modus und dem Nicht-Zuhause-Modus umschalten. Während sich in Fig. 2 ein Schiebeschalter 19 in einer ersten Stellung befindet und somit der Zuhause-Modus aktiviert ist, ist in dem Beispiel gemäß Fig. 3 der Schiebeschalter 19 in einer zweiten Stellung angeordnet, wodurch der Nicht-Zuhause-Modus aktiviert wird. Die jeweiligen Modi werden auch mit graphischen Symbolen 20 gekennzeichnet.

Mit erneutem Bezug auf Fig. 1 kann die Bedienvorrichtung 2 auch einen Navigationsempfänger 21 umfassen, beispielsweise einen GPS-Empfänger. Der Navigationsempfänger 21 stellt Positionsdaten bereit, welche die aktuelle geographische Position der Bedienvorrichtung 2 charakterisieren. Diese Positionsdaten werden durch die Steuereinheit 13 empfangen, welche anhand der Positionsdaten die aktuelle Position bestimmt.

Während in dem Zuhause-Modus erste Einstellungen an den Haushaltsgeräten 3 vorgenommen werden, werden in dem Nicht-Zuhause-Modus an den Haushaltsgeräten 3 zweite Einstellungen vorgenommen. Diese werden nachfolgend näher beschrieben.

In dem Zuhause-Modus werden beispielsweise folgende Funktionalitäten bereitgestellt:
- Zumindest eines der Haushaltsgeräte 3, insbesondere das Haushaltskältegerät 5, wird von einem Energiesparmodus in einen Normalmodus umgeschaltet und/oder
- bei zumindest einem der Haushaltsgeräte 3, insbesondere bei der Waschmaschine 10 und/oder der Geschirrspülmaschine 7, unterbleibt nach Abschluss eines Betriebsprogramms die Aussendung einer Nachricht, welche sonst in dem Nicht-Zuhause-Modus zur Signalisierung des Abschlusses des Betriebsprozesses an die tragbare Bedienvorrichtung 2 übermittelt wird, und/oder
- ein Wasserkocher wird zum Kochen von Wasser aktiviert.

Demgegenüber werden in dem Nicht-Zuhause-Modus folgende Änderungen vorgenommen:
- Zumindest eines der Haushaltsgeräte 3, insbesondere das Haushaltskältegerät 5, wird von dem Normalmodus in den Energiesparmodus mit einem reduzierten elektrischen Leistungsverbrauch umgeschaltet und/oder
- zumindest eines der Haushaltsgeräte 3, insbesondere die Waschmaschine 10 und/oder die Geschirrspülmaschine 7, wird in einen Ökomodus umgeschaltet, in welchem ein Betriebsprozess dieses Haushaltsgeräts 3 im Vergleich zu einem Normalmodus unter Inanspruchnahme einer längeren Zeitdauer und einer geringeren elektrischen Leistung durchgeführt wird, und/oder
- bei zumindest einem der Haushaltsgeräte 3, insbesondere bei der Waschmaschine 10 und/oder einer Geschirrspülmaschine 7, unterbleibt nach Abschluss eines Betriebsprogramms die Ausgabe eines akustischen Signals, welches in dem Zuhause-Modus ausgegeben wird, und/oder
- mittels eines Fernsehempfängers wird eine vorbestimmte Fernsehsendung aufgenommen.

Bei der Ansteuerung der Haushaltsgeräte 3 kann die Steuereinheit 13 der tragbaren Bedienvorrichtung 2 auch die aktuelle Position der Bedienvorrichtung 2 berücksichtigen. Dabei kann die Steuereinheit 13 die aktuelle Position mit einem Referenzbereich vergleichen, welcher der Wohneinheit 4 bzw. dem Haushalt entspricht. Somit kann die Steuereinheit 13 bestimmen, ob sich die Bedienvorrichtung 2 und somit auch der Benutzer zu Hause oder außerhalb der Wohneinheit 4 befindet. Abhängig davon kann dann zumindest eines der Haushaltsgeräte 3 in Betrieb genommen und/oder deaktiviert werden. Dies kann beispielsweise so aussehen, dass ein nicht dargestellter Kaffeeautomat dann in Betrieb genommen wird, wenn sich einerseits die Bedienvorrichtung 2 innerhalb des genannten Referenzbereichs befindet und andererseits auch die aktuelle Ortszeit in einem vorgegebenen Wertebereich liegt. Beispielsweise kann der Kaffee um sieben Uhr morgens zubereitet werden, wenn sich der Benutzer zu Hause befindet.

Wird durch die Steuereinheit 13 detektiert, dass sich der Benutzer außerhalb der Wohneinheit 4 befindet und eines der Haushaltsgeräte 3 - insbesondere der Herd 8 und/oder der Backofen 6 - aktiviert ist, so kann mittels der Bedienvorrichtung 2 ein Warnsignal ausgegeben werden, etwa über die Anzeigeeinrichtung 11 und/oder einen Lautsprecher. Somit wird der Benutzer darauf hingewiesen, dass er beispielsweise den Herd 8 vergessen hat, auszuschalten.

Wird durch den Benutzer der Nicht-Zuhause-Modus aktiviert, so werden auf der Anzeigeeinrichtung 11 in der Benutzeroberfläche 15 auch diejenigen Haushaltsgeräte 3 angezeigt bzw. signalisiert (beispielsweise in Textform), welche aktuell aktiviert sind. Somit kann sich der Benutzer in einfacher und besonders intuitiver Weise einen Überblick darüber verschaffen, welche der Haushaltsgeräte 3 momentan aktiv sind und gegebenenfalls ausgeschaltet werden müssten.

### Bezugszeichenliste

- 1: System
- 2: Bedienvorrichtung
- 3: Haushaltsgeräte
- 4: Wohneinheit
- 5: Haushaltskältegerät
- 6: Backofen
- 7: Geschirrspülmaschine
- 8: Herd
- 9: Dunstabzugshaube
- 10: Waschmaschine
- 11: Anzeigeeinrichtung
- 12: berührungssensitive Oberfläche
- 13: Steuereinheit
- 14: Kommunikationseinrichtung
- 15: graphische Benutzeroberfläche
- 16: Statusdaten
- 17: Steuersignale
- 18: Bedientaste
- 19: Schiebeschalter
- 20: Symbole
- 21: Navigationsempfänger

## Patentansprüche

1. Verfahren zum Steuern einer Mehrzahl von Haushaltsgeräten (3) mithilfe einer tragbaren Bedienvorrichtung (2), welche mit den Haushaltsgeräten (3) drahtlos kommuniziert und hierbei ein Steuersignal (17) an die Haushaltsgeräte (3) übermittelt, mit welchem die Haushaltsgeräte (3) gemeinsam zwischen einem Zuhause-Modus, in welchem bei den Haushaltsgeräten (3) erste Einstellungen vorgenommen werden, und einem Nicht-Zuhause-Modus umgeschaltet werden, in welchem bei den Haushaltsgeräten (3) zweite Einstellungen vorgenommen werden, wobei durch die tragbare Bedienvorrichtung (2) eine Bedieneingabe empfangen wird, welche durch einen Benutzer über eine Eingabeeinrichtung (11, 12) der tragbaren Bedienvorrichtung (2) durchgeführt wird, und das Steuersignal (17) zum Umschalten der Haushaltsgeräte (3) durch die tragbare Bedienvorrichtung (2) aufgrund der Bedieneingabe ausgesendet wird,
**dadurch gekennzeichnet, dass**
mittels eines Navigationsempfängers (21) der tragbaren Bedienvorrichtung (2) Positionsdaten bereitgestellt werden, welche eine aktuelle Position der Bedienvorrichtung (2) charakterisieren, wobei falls durch die tragbare Bedienvorrichtung (2) anhand der aktuellen Position und anhand von empfangenen Statusdaten (16) eines vorbestimmten Haushaltsgeräts (3), insbesondere eines Gargeräts (6, 8), detektiert wird, dass sich die Bedienvorrichtung (2) außerhalb eines vorgegebenen Referenzbereichs befindet und das vorbestimmte Haushaltsgerät (3) aktiviert ist, durch die tragbare Bedienvorrichtung (2) ein Warnsignal ausgegeben wird, mittels welchem der Benutzer auf den aktivierten Zustand des Haushaltsgeräts (3) hingewiesen wird.

2. Verfahren nach Anspruch 1, **dadurch gekennzeichnet, dass** auf einer berührungssensitiven Anzeigeeinrichtung (11) als Eingabeeinrichtung (11, 12) der tragbaren Bedienvorrichtung (2) eine Bedientaste (18) bereitgestellt wird und die Bedieneingabe durch Betätigen der Bedientaste (18) durch Berühren der berührungssensitiven Anzeigeeinrichtung (11) durchgeführt wird.

3. Verfahren nach Anspruch 1 oder 2, **dadurch gekennzeichnet, dass** durch die tragbare Bedienvorrichtung (2) in dem Nicht-Zuhause-Modus von den Haushaltsgeräten (3) Statusdaten (16) empfangen werden, welche einen aktuellen Betriebszustand der jeweiligen Haushaltsgeräte (3) charakterisieren, wobei auf einer Anzeigeeinrichtung (11) der tragbaren Bedienvorrichtung (2) die momentan aktivierten Haushaltsgeräte (3) angezeigt werden.

4. Verfahren nach einem der vorhergehenden Ansprüche, **dadurch gekennzeichnet, dass** die zweiten Einstellungen umfassen, dass:
- zumindest eines der Haushaltsgeräte (3), insbesondere ein Haushaltskältegerät (5), von einem Normalmodus in einen Energiesparmodus mit einem reduzierten elektrischen Leistungsverbrauch umgeschaltet wird und/oder
- zumindest eines der Haushaltsgeräte (3), insbesondere ein Gerät (10) zur Pflege von Wäschestücken und/oder eine Geschirrspülmaschine (7), in einen Ökomodus umgeschaltet wird, in welchem ein Betriebsprozess dieses Haushaltsgeräts (3) im Vergleich zu einem Normalmodus unter Inanspruchnahme einer längeren Zeitdauer und einer geringeren elektrischen Leistung durchgeführt wird, und/oder
- bei zumindest einem der Haushaltsgeräte (3), insbesondere bei einem Gerät (10) zur Pflege von Wäschestücken und/oder einer Geschirrspülmaschine (7), nach Abschluss eines Betriebsprogramms die Ausgabe eines akustischen Signals unterbleibt, welches in dem Zuhause-Modus ausgegeben wird, und/oder
- mittels eines Fernsehempfängers eine vorbestimmte Fernsehsendung aufgenommen wird.

5. Verfahren nach einem der vorhergehenden Ansprüche, **dadurch gekennzeichnet, dass** die ersten Einstellungen umfassen, dass:
- zumindest eines der Haushaltsgeräte (3), insbesondere ein Haushaltskältegerät (5), von einem Energiesparmodus in einen Normalmodus umgeschaltet wird und/oder
- bei zumindest einem der Haushaltsgeräte (3), insbesondere bei einem Gerät (10) zur Pflege von Wäschestücken und/oder einer Geschirrspülmaschine (7), nach Abschluss eines Betriebsprogramms die Aussendung einer Nachricht unterbleibt, welche in dem Nicht-Zuhause-Modus zur Signalisierung des Abschlusses des Betriebsprozesses an die tragbare Bedienvorrichtung (2) übermittelt wird, und/oder
- ein Wasserkocher zum Kochen von Wasser aktiviert wird.

6. Verfahren nach einem der vorhergehenden Ansprüche, **dadurch gekennzeichnet, dass** durch die tragbare Bedienvorrichtung (2) eine Bedieneingabe des Benutzers empfangen wird, durch welche für zumindest eines der Haushaltsgeräte (3) die ersten und/oder die zweiten Einstellungen benutzerindividuell festgelegt werden.

7. Verfahren nach einem der vorhergehenden Ansprüche, **dadurch gekennzeichnet, dass** mittels eines Navigationsempfängers (21) der tragbaren Bedienvorrichtung (2) Positionsdaten bereitgestellt werden, welche eine aktuelle Position der Bedienvorrichtung (2) charakterisieren, wobei zumindest eines der Haushaltsgeräte (3) abhängig von der aktuellen Position in Betrieb genommen und/oder abhängig von der Position deaktiviert wird.

8. Verfahren nach Anspruch 7, **dadurch gekennzeichnet, dass** falls durch die tragbare Bedienvorrichtung (2) anhand der aktuellen Position detektiert wird, dass sich die Bedienvorrichtung (2) in einem vorgegebenen Referenzbereich befindet, durch die tragbare Bedienvorrichtung (2) unmittelbar oder nach Erfülltsein eines vorgegebenen Zusatzkriteriums ein Steuersignal (17) an einen Kaffeeautomaten übermittelt wird, durch welches der Kaffeeautomat in Betrieb genommen wird.

9. Verfahren nach Anspruch 8, **dadurch gekennzeichnet, dass** durch die tragbare Bedienvorrichtung (2) die aktuelle Ortszeit erfasst wird und das Zusatzkriterium umfasst, dass die aktuelle Ortszeit in einem vorgegebenen Wertebereich liegt.

10. Verfahren nach einem der vorhergehenden Ansprüche, **dadurch gekennzeichnet, dass** die tragbare Bedienvorrichtung (2) als mobiles Kommunikationsendgerät ausgebildet ist, welches über ein Heimnetzwerk und/oder einen Internetserver mit den Haushaltsgeräten (3) kommuniziert.

11. Tragbare Bedienvorrichtung (2), insbesondere mobiles Kommunikationsendgerät, welche dazu ausgelegt ist, ein Verfahren nach einem der vorhergehenden Ansprüche durchzuführen.

12. System (1) mit einer Mehrzahl von Haushaltsgeräten (3), und mit einer tragbaren Bedienvorrichtung (2) nach Anspruch 11.

13. Computerprogrammprodukt mit einem Datenträger, auf welchem ein Computerprogramm abgelegt ist, welches dazu ausgelegt ist, beim Ablauf auf einem mobilen Kommunikationsendgerät ein Verfahren nach einem der Ansprüche 1 bis 10 durchzuführen.

## Claims

1. Method for controlling a plurality of domestic appliances (3) with the aid of a portable operating apparatus (2) that communicates wirelessly with the domestic appliances (3) and, in doing so, transfers a control signal (17) to the domestic appliances (3) with which the domestic appliances (3) are changed over jointly between an at-home mode in which first settings are made at the domestic appliances (3) and a not-at-home mode in which second settings are made at the domestic appliances (3), wherein an operator input is received by the portable operating apparatus (2), which is made by a user via an input device (11, 12) of the portable operating apparatus (2) and the control signal (17) for changing over the domestic appliances (3) is emitted by the portable operating apparatus (2) as a result of the user input,
**characterised in that**
position data, which characterises a current position of the operating apparatus (2), is provided by a navigation receiver (21) of the portable operating apparatus (2), wherein, if it is detected by the portable operating apparatus (2) on the basis of the current position and on the basis of received status data (16) of a pre-specified domestic appliance (3), especially a cooking appliance (6, 8) that the operating apparatus (2) is located outside a predetermined reference area and the pre-specified domestic appliance (3) is activated, a warning signal is output by the portable operating apparatus (2) by means of which the user is notified about the activated state of the domestic appliance (3).

2. Method according to claim 1, **characterised in that** an operating key (18) is provided on a touch-sensitive display device (11) as input device (11, 12) of the portable operating apparatus (2) and the operating input is made through actuating the operating key (18) by touching the touch-sensitive display device (11).

3. Method according to claim 1 or 2, **characterised in that**, in not-at-home mode, status data (16), which characterises a current operating state of the respective domestic appliances (3) is received from the domestic appliances (3) by the portable operating apparatus (2), wherein the domestic appliances (3) currently activated are shown on a display device (11) of the portable operating apparatus (2).

4. Method according to one of the preceding claims, **characterised in that** the second settings include that
- at least one of the domestic appliances (3), especially a domestic refrigeration appliance (5), is changed over from a normal mode into an energy-saving mode with a reduced electrical power consumption, and/or
- at least one of the domestic appliances, (3) especially an appliance (10) for care of laundry items and/or a dishwasher (7), is switched over to an economy mode in which, by comparison with a normal mode, an operating process of this domestic appliance (3) is carried out while taking a longer period of time or having a lower power consumption, and/or
- for at least one of the domestic appliances (3), especially for an appliance (10) for care of laundry items and/or a dishwasher (7), after conclusion of an operating program, the output of an acoustic signal that is output in at-home mode is suppressed, and/or
- a pre-specified television broadcast is recorded by means of a television receiver.

5. Method according to one of the preceding claims, **characterised in that** the first settings include that
- at least one of the domestic appliances (3), especially a domestic refrigeration appliance (5), is changed over from a energy-saving mode into a normal mode, and/or
- for at least one of the domestic appliances (3), especially for an appliance (10) for care of laundry items and/or a dishwasher (7), after conclusion of an operating program, the output of an acoustic signal is suppressed, which is transferred to the portable operating apparatus (2) in the not-at-home mode for signalling the conclusion of the operating process, and/or
- a water heater is activated to boil water.

6. Method according to one of the preceding claims, **characterised in that** an operating input of the user is received by the portable operating apparatus (2), through which for at least one of the domestic appliances (3) the first and/or second settings are defined for an individual user.

7. Method according to one of the preceding claims, **characterised in that** position data, which characterises a current position of the operating apparatus (2) is provided by a navigation receiver (21) of the portable operating apparatus (2), wherein at least one of the domestic appliances (3) is put into operation as a function of the current position and/or is deactivated as a function of the position.

8. Method according to claim 7, **characterised in that**, if it is detected by the portable operating apparatus (2) on the basis of the current position that the operating apparatus (2) is located in a predetermined reference area, immediately after a predetermined additional criterion has been fulfilled, the portable operating apparatus (2) transfers a control signal to an automatic coffee making machine, through which the automatic coffee making machine is put into operation.

9. Method according to claim 8, **characterised in that** the current local time is detected by the portable operating apparatus (2) and the additional criterion includes that the current local time lies in a predetermined range of values.

10. Method according to one of the preceding claims, **characterised in that** the portable operating apparatus (2) is embodied as a mobile communication terminal, which communicates with the domestic appliances (3) via a home network and/or an Internet server.

11. Portable operating apparatus (2), especially a mobile communication terminal, which is designed to carry out a method according to one of the preceding claims.

12. System (1) with a plurality of domestic appliances (3) and with a portable operating apparatus (2) according to claim 11.

13. Computer program product with a data medium on which a computer program is stored, which is designed, when executed on a mobile communication terminal, to carry out a method according to one of claims 1 to 10.

## Revendications

1. Procédé de commande d'une pluralité d'appareils électroménagers (3) à l'aide d'un dispositif de commande portable (2) qui communique sans fil avec les appareils électroménagers (3) et transmet dans ce cadre un signal de commande (17) aux appareils électroménagers (3) au moyen duquel les appareils électroménagers (3) peuvent commuter ensemble entre un mode présence dans lequel des premiers paramétrages sont effectués sur les appareils électroménagers (3) et un mode absence dans lequel des deuxièmes paramétrages sont effectués sur les appareils électroménagers (3), par le dispositif de commande portable (2) étant reçue une saisie de commande qui est exécutée par un utilisateur via un dispositif de saisie (11, 12) du dispositif de commande portable (2) et le signal de commande (17) pour la commutation des appareils électroménagers (3) étant émis par le dispositif de commande portable (2) sur la base de la saisie de commande,
**caractérisé en ce que**
sont fournies, au moyen d'un récepteur de navigation (21) du dispositif de commande portable (2), des données de position qui caractérisent une position actuelle du dispositif de commande (2), étant entendu que, si le dispositif de commande portable (2) détecte, à l'aide de la position actuelle et à l'aide de données de statut reçues (16) d'un appareil électroménager prédéterminé (3), en particulier un appareil de cuisson (6, 8), que le dispositif de commande (2) se trouve en dehors d'une zone de référence donnée et que l'appareil électroménager prédéterminé (3) est activé, le dispositif de commande portable (2) émet un signal d'avertissement au moyen duquel l'utilisateur est informé de l'état activé de l'appareil électroménager (3).

2. Procédé selon la revendication 1, **caractérisé en ce qu'**une touche de commande (18) est mise à disposition sur un dispositif d'affichage tactile (11) en tant que dispositif de saisie (11, 12) du dispositif de commande portable (2) et **en ce que** la saisie de commande est exécutée par actionnement de la touche de commande (18) par contact avec le dispositif d'affichage tactile (11).

3. Procédé selon la revendication 1 ou 2, **caractérisé en ce que** sont reçues des appareils électroménagers (3), par le dispositif de commande portable (2), dans le mode absence, des données de statut (16) qui caractérisent un état de fonctionnement actuel des appareils électroménagers respectifs (3), les appareils électroménagers actuellement activés (3) étant affichés sur un dispositif d'affichage (11) du dispositif de commande portable (2).

4. Procédé selon l'une des revendications précédentes, **caractérisé en ce que** les deuxièmes paramétrages incluent que :
- au moins l'un des appareils électroménagers (3), en particulier un appareil frigorifique électroménager (5), passe d'un mode normal à un mode d'économie d'énergie avec consommation de puissance électrique réduite et/ou
- au moins l'un des appareils électroménagers (3), en particulier un appareil (10) pour l'entretien de pièces de linge et/ou un lave-vaisselle (7), passe dans un mode éco dans lequel un processus de fonctionnement dudit appareil électroménager (3) est exécuté, en comparaison avec un mode normal, en faisant appel à une plus longue durée et une puissance électrique moindre et/ou
- pour au moins l'un des appareils électroménagers (3), en particulier un appareil (10) pour l'entretien de pièces de linge et/ou un lave-vaisselle (7), une fois un programme de fonctionnement terminé, l'émission d'un signal acoustique émis en mode présence n'a pas lieu et/ou
- une émission télévisée prédéterminée est enregistrée au moyen d'un récepteur de télévision.

5. Procédé selon l'une des revendications précédentes, **caractérisé en ce que** les premiers paramétrages incluent que :
- au moins l'un des appareils électroménagers (3), en particulier un appareil frigorifique électroménager (5), passe d'un mode d'économie d'énergie à un mode normal et/ou
- pour au moins l'un des appareils électroménagers (3), en particulier un appareil (10) pour l'entretien de pièces de linge et/ou un lave-vaisselle (7), une fois un programme de fonctionnement terminé, l'émission d'un message transmis au dispositif de commande portable (2) en mode absence pour signaler la fin du processus de fonctionnement n'a pas lieu et/ou
- une bouilloire électrique destinée à porter de l'eau à ébullition est activée.

6. Procédé selon l'une des revendications précédentes, **caractérisé en ce que** le dispositif de commande portable (2) reçoit une saisie de commande de l'utilisateur par laquelle les premiers et/ou les deuxièmes paramétrages sont déterminés individuellement pour l'utilisateur pour au moins l'un des appareils électroménagers (3).

7. Procédé selon l'une des revendications précédentes, **caractérisé en ce que** sont fournies, au moyen d'un récepteur de navigation (21) du dispositif de commande portable (2) des données de position qui caractérisent une position actuelle du dispositif de commande (2), au moins l'un des appareils électroménagers (3) étant mis en service en fonction de la position actuelle et/ou désactivé en fonction de la position.

8. Procédé selon la revendication 7, **caractérisé en ce que**, si le dispositif de commande portable (2) détecte, à l'aide de la position actuelle, que le dispositif de commande (2) se trouve dans une zone de référence donnée, le dispositif de commande portable (2) transmet à une machine à café, directement ou après qu'un critère supplémentaire donné est rempli, un signal de commande (17) qui met la machine à café en service.

9. Procédé selon la revendication 8, **caractérisé en ce que** l'heure locale actuelle est captée par le dispositif de commande portable (2) et **en ce que** le critère supplémentaire inclut que l'heure locale actuelle se trouve dans une plage de valeurs donnée.

10. Procédé selon l'une des revendications précédentes, **caractérisé en ce que** le dispositif de commande portable (2) est réalisé en tant que terminal de communication mobile qui communique avec les appareils électroménagers (3) via un réseau domestique et/ou un serveur internet.

11. Dispositif de commande portable (2), en particulier terminal de communication mobile, qui est conçu pour exécuter un procédé selon l'une des revendications précédentes.

12. Système (1) comportant une pluralité d'appareils électroménagers (3) et un dispositif de commande portable (2) selon la revendication 11.

13. Produit de programme informatique comportant un support de données sur lequel est déposé un programme informatique qui est conçu pour exécuter un procédé selon l'une des revendications 1 à 10 lorsqu'il tourne sur un terminal de communication mobile.
